# EUROPEAN PATENT SPECIFICATION

(11) **EP 2 606 691 B1**
(45) Date of publication and mention of the grant of the patent: **31.12.2014**
(21) Application number: 11751962.9
(22) Date of filing: 15.08.2011
(51) Int. Cl.: H04W 64/00

(54) **USER EQUIPMENT, NETWORK NODE AND METHODS THEREIN**
BENUTZERGERÄT, NETZWERKKNOTEN UND VERFAHREN DARIN
EQUIPEMENT UTILISATEUR, NOEUD DE RÉSEAU ET PROCÉDÉS ASSOCIÉS

(30) Priority: 16.08.2010 US 374037 P
(43) Date of publication of application: 26.06.2013
(73) Proprietor: Optis Cellular Technology, LLC, Plano, TX 75025 (US)
(72) Inventor: CUI, Tao, SE-194 68 Upplands Väsby (SE); KAZMI, Muhammad, SE-167 39 Bromma (SE); SIOMINA, Iana, SE-170 66 Solna (SE)
(74) Representative: Grünecker, Kinkeldey, Stockmair & Schwanhäusser
(86) International application number: PCT/SE2011/050990
(87) International publication number: WO 2012/023897

(56) References cited:
- WO-A1-00/78084
- US-A1- 2004 166 856
- US-A1- 2005 007 980
- ZTE: "Discussion on UE Positioning in handover", 3GPP DRAFT; R2-094728, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352781, [retrieved on 2009-08-18]
- "3rd Generation Partnership Project; Technical Specification Group Radio Access Network; Evolved Universal Terrestrial Radio Access (E-UTRA); Requirements for support of radio resource management (Release 9)", 3GPP STANDARD; 3GPP TS 36.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 21 June 2010 (2010-06-21), pages 1-377, XP050441973, [retrieved on 2010-06-21]
- ERICSSON: "Inter NSE Cell Change for LCS for GPRS", 3GPP DRAFT; GP-012712_CR_INTERNSE_49031-500, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Cancun; 20011128, 28 November 2001 (2001-11-28), XP050004576, [retrieved on 2001-11-28]
- QUALCOMM EUROPE: "Continuity at handover for OTDOA", 3GPP DRAFT; R2-096966, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050391343, [retrieved on 2009-11-03]

## Description

### TECHNICAL FIELD

Embodiments herein relate to a user equipment, a network node, and methods therein. In particular, embodiments herein relate to handle cell change in a radio communications network.

### BACKGROUND

In today's radio communications networks a number of different technologies are used, such as Long Term Evolution (LTE), LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible technologies for radio communication. A radio communications network comprises radio base stations providing radio coverage over at least one respective geographical area forming a cell. User equipments (UE) are served in the cells by the respective radio base station and are communicating with respective radio base station. The user equipments transmit data over a radio interface to the radio base stations in uplink (UL) transmissions and the radio base stations transmit data to the user equipments in downlink (DL) transmissions.

The possibility of identifying a geographical location of a user equipment in the radio communications network has enabled a large variety of commercial and non-commercial services, e.g. navigation assistance, social networking, location-aware advertising, emergency calls, etc. Different services may have different positioning accuracy requirements imposed by the positioning application. In addition, some regulatory requirements on the positioning accuracy for basic emergency services exist in some countries, e.g. 300 meters in Federal Communications Commission (FCC) Enhanced 9-1-1 in the United States.

In many environments, a user equipment's position may be accurately estimated by using positioning methods based on the Global Positioning System (GPS). Nowadays, radio communications networks also often have a possibility to assist user equipments in order to improve the user equipment's receiver sensitivity and GPS start-up performance, e.g. as Assisted-GPS (A-GPS) positioning do. GPS or A-GPS receivers may, however, not necessarily be available in all user equipments. Furthermore, GPS is known to often fail in indoor environments and urban canyons. A complementary terrestrial positioning method, called Observed Time Difference of Arrival (OTDOA), has therefore been standardized by 3rd Generation Partnership Project (3GPP). In addition to OTDOA, the LTE standard also specifies methods, procedures, and signaling support for Enhanced Cell ID (E-CID) and Assisted-Global Navigation Satellite System (A-GNSS) positioning. In future, Uplink Time Difference of Arrival (UTDOA) may also be standardized for LTE, which is a real time locating technology that uses multilateration based on timing of received uplink signals. Multilateration is the process of locating an object by accurately computing the Time Difference Of Arrival (TDOA) of a signal emitted from that object to three or more receivers.

With E-CID, the following sources of position information are involved: the Cell Identification (CID) and the corresponding geographical description of the serving cell, the Timing Advance (TA) of the serving cell, and the CIDs and the corresponding signal measurements of the cells, up to 32 cells in LTE, including the serving cell, as well as Angle of Arrival (AoA) measurements. The following UE measurements may be utilized for E-CID in LTE: evolved UMTS Terrestrial Radio Access Network (E-UTRAN) carrier Received Signal Strength Indicator (RSSI), Reference Signal Received Power (RSRP); Reference Signal Received Quality (RSRQ); and UE Receive-Transmit (Rx-Tx) time difference. The E-UTRAN measurements available for E-CID are: radio base station Rx-Tx time difference; TA Type 1 being radio base station Rx-Tx time difference + UE Rx-Tx time difference; TA Type 2 being radio base station Rx-Tx time difference, and UL AoA.

UE Rx-Tx measurement is currently defined for the serving cell only, and e.g. RSRP and RSRQ as well as AoA may be utilized for any cell and may also be conducted on a frequency different from that of the serving cell. UE measurements for E-CID are reported by the user equipment to the positioning node, e.g. Enhanced Serving Mobile Location Centre (SMLC) or Secure User Plane Location (SUPL) Location Platform (SLP) in LTE, over the LTE Positioning Protocol (LPP), and the E-UTRAN measurements for E-CID are reported by the radio base station to the positioning node over the LPP Annex protocol (LPPa). Both the UE and the E-UTRA measurements may be configured to be reported periodically or once. Some UE Rx-Tx measurements that are available in the radio base station may also be reported over LPPa on request from the positioning node. In addition to that the UE Rx-Tx time difference to the positioning node is reported over LPP, mainly to support the user-plane positioning, it also is reported via Radio Resource Control (RRC) to radio base station so that the TA Type1 can be provided by radio base station.

With OTDOA, a user equipment measures the timing differences for downlink reference signals received from multiple distinct locations. For each measured neighbor cell, the user equipment measures Reference Signal Time Difference (RSTD) which is the relative timing difference between neighbor cell and the reference cell. The estimate of the user equipment position is then found as the intersection of hyperbolas, which are geometrical curves, corresponding to the measured RSTDs. At least three measurements from geographically dispersed radio base stations with a good geometry are needed to solve for two coordinates of the user equipment and the user equipment receiver's clock bias. In order to solve for position, precise knowledge of locations of respective transmitter of the radio base stations and transmit timing offset is needed. Position calculation may be conducted, for example, by the positioning node, e.g. Enhanced Serving Mobile Location Centre (SMLC), Secure User Plane Location (SUPL) Location Platform (SLP) in LTE, or the user equipment. The former approach corresponds to the user equipment-assisted positioning mode, and the latter corresponds to the user equipment-based positioning mode.

To enable positioning in LTE and facilitate a positioning measurement of a proper quality and for a sufficient number of distinct locations, new physical signals dedicated for positioning, e.g. Positioning Reference Signals (PRS), have been introduced and low-interference positioning subframes have been specified in 3GPP. PRSs are transmitted from one antenna port, e.g. antenna port R6, according to a pre-defined pattern. A frequency shift, which is a function of the Physical Cell Identity (PCI), may be applied to the specified PRS patterns to generate orthogonal patterns and modelling the effective frequency reuse of six patterns, which makes it possible to significantly reduce neighbour cell interference on the measured PRS and thus improve a positioning measurement. Even though PRSs have been specifically designed for a positioning measurement and in general are characterized by better signal quality than other reference signals, the standard does not mandate using the PRSs. Other reference signals, e.g. Cell-specific Reference Signals (CRS) may also be used for a positioning measurement.

PRSs are transmitted in a predefined pattern such as pre-defined positioning subframes grouped by a number N of consecutive subframes of PRS, NPRS for short, i.e. one positioning occasion. Positioning occasions occur periodically with a certain periodicity of the number N of subframes, i.e. the time interval between two positioning occasions. The standardized periods are 160, 320, 640, and 1280 ms stated in 3GPP TS 36.211 section 6.10.4.3, and the number of consecutive subframes are 1, 2, 4, and 6 as defined in 3GPP TS 36.355 section 6.5.1.2.

The OTDOA and other positioning methods such as E-CID are to be used also for emergency calls. Hence the response time of these measurements should be as low as possible to meet the emergency call requirements.

It has been discussed and agreed that e.g. the OTDOA positioning measurements may in general continue upon handover and no specific behavior or additional procedures need to be specified when an OTDOA positioning session is on-going upon handover (HO). The general handover procedures are defined in 3GPP. To simplify the handover procedures, the reference cell in the OTDOA assistance data is not necessarily the same as the serving cell, which means that after changing the serving cell, the user equipment may avoid requesting new assistance information since the reference cell does not change. For E-CID, nothing specific has been discussed in the context of handover.

Unlike some other timing measurements, UE Rx-Tx measurements available for E-CID positioning are specified only for the serving cell, which means that at e.g. a handover the user equipment will not be able to continue properly with this measurement after the serving cell changes. Similarly the radio base station Rx-Tx time difference measurements and AoA measurements are performed by the radio base station on the signals received from the user equipment at the serving cell. The E-CID method may also require additional neighbor cell measurements e.g. RSRP and RSRQ, which are measured by the user equipment on the neighboring cells. Due to these differences between E-CID and OTDOA it may be not feasible to have the same handover behaviors for both OTDOA and E-CID. Today, the user equipment may provide erroneous positioning measurements since the positioning measurements may rely on wrong assumptions made by the user equipment which may also be inconsistent with the information at the positioning node providing the positioning assistance data. Thus, today's radio communications networks sometimes does not achieve the required positioning accuracy since the radio base station and the user equipment makes erroneous assumption about their respective behaviour and the user equipment may not fulfil the positioning measurement requirements, e.g. when positioning during a cell change.

3GPP TSG-RAN WG2 #68 contribution R2-096966, by Qualcomm Europe, titled "Continuity at handover for OTDOA", discusses how an OTDOA positioning session can contiue through a handover.

Furthermore, document US2004/0166856 disclosed how a location center (SMLC) can postpone a positioning procedure upon receiving a handover detection message.

### SUMMARY

An object of embodiments herein is to enable a positioning of a user equipment in a radio communications network that is accurate in an efficient manner.

According to an aspect the object is achieved by a method in a user equipment for handling cell change in a radio communications network. The user equipment is served by at least a first cell controlled by a radio network node. The user equipment is to perform a cell change process to a second cell and a positioning session of the user equipment, and the user equipment postpones one of the positioning session and the cell change process relative one another.

According to another aspect the object is achieved by a method a network node for handling cell change of a user equipment between cells in a radio communications network. The user equipment is served in a first cell controlled by the network node. The network node delays an initiation of a positioning session for the user equipment in case there is an on-going cell change process of the user equipment. Some examples of the network node are positioning node and MME.

According to another aspect the object is achieved by a user equipment for handling cell change in a radio communications network. The user equipment is arranged to be served by at least a first cell controlled by a radio network node. Furthermore, the user equipment comprises a postponing circuit configured to postpone one of a positioning session and a cell change process to a second cell relative to one another when to perform the cell change process and the positioning session of the user equipment.

According to another aspect the object is achieved by network node for handling cell change of a user equipment between cells in a radio communications network. The user equipment is served in a first cell controlled by the network node. The network node comprises a delaying circuit configured to delay an initiation of a positioning session for the user equipment in case there is an on-going cell change process of the user equipment.

As the positioning session is postponed or delayed relative the cell change process, or the cell change is postponed or delayed relative the positioning session, the positioning of the user equipment will be accurate as the serving cell does not change during the positioning session.

### BRIEF DESCRIPTION OF THE DRAWINGS

Embodiments will now be described in more detail in relation to the enclosed drawings, in which:
- Fig. 1: is a schematic overview of a radio communications network,
- Fig. 2: is a schematic combined flowchart and signaling scheme in a radio communications network,
- Fig. 3: is a schematic combined flowchart and signaling scheme in a radio communications network,
- Fig. 4: is a schematic flowchart of a method in a user equipment,
- Fig. 5: is a block diagram depicting a user equipment,
- Fig. 6: is a schematic flowchart of a method in a network node, and
- Fig. 7: is a block diagram depicting a network node.

### DETAILED DESCRIPTION

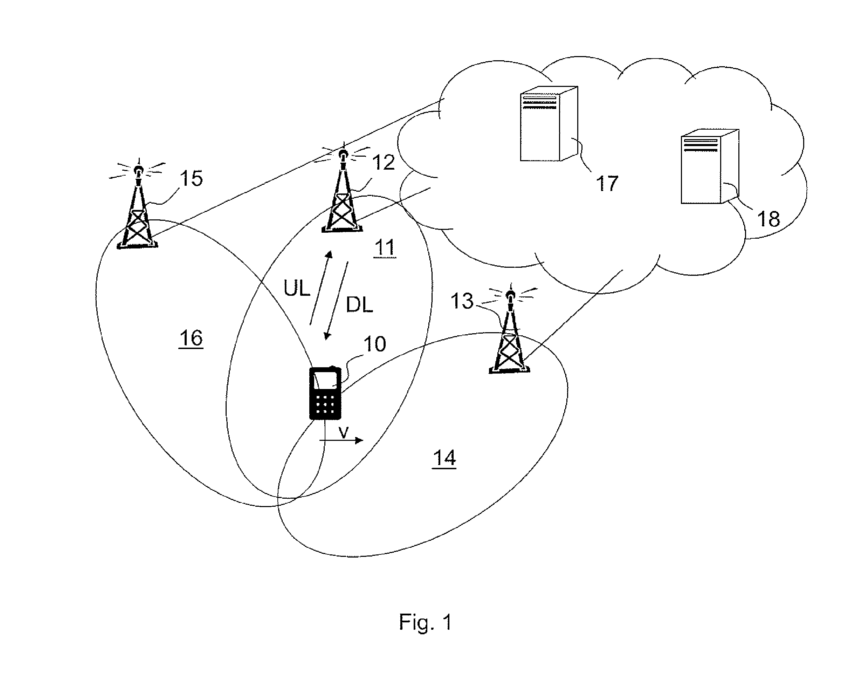

**Fig. 1** is a schematic overview of a radio communications network such as a Long Term Evolution (LTE), LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), network just to mention a few possible implementations. The radio communications network comprises a radio network node, such as **a first radio base station 12,** providing radio coverage over at least one geographical area forming **a first cell 11. A user equipment 10** is served in the first cell 11 by the first radio base station 12 and is communicating with the first radio base station 12. The first cell 11 is thus a serving cell to the user equipment 10 in this example. The user equipment 10 transmits data over a radio interface to the first radio base station 12 in an uplink (UL) transmission and the first radio base station 12 transmits data to the user equipment 10 in a downlink (DL) transmission. The radio communications network may further comprise **a second radio base station 13.** The second radio base station 13 provides radio coverage over another geographical area forming **a second cell 14.** The radio communications network may further comprise **a third radio base station 15.** The third radio base station 15 provides radio coverage over another geographical area forming **a third cell 16.** Furthermore, the radio communications network may comprise **a positioning node 17** and **a Mobility Management Entity (MME) 18** arranged in a core network of the radio communications network. A network node according to embodiments herein may be the positioning node 17 or the MME 18.

The positioning node 17 may be exemplified as a Location Service (LCS) server, Server Mobile Location Centre (SMLC), Secure User Plane Location (SUPL) Location Platform (SLP) or any network node enabled to perform positioning of the user equipment 10.

It should be understood that the term "user equipment" is a non-limiting term which means any wireless terminal, device or node e.g. Personal Digital Assistant (PDA), laptop, mobile, sensor, relay, an LCS target device in general, an LCS client in the network or even a radio node e.g. small base station that are being positioned. The user equipment 10 may also be capable and not capable of performing inter-frequency measurements without gaps, e.g. a user equipment capable of carrier aggregation.

A radio network node may be any node equipped with a radio interface. Some examples are radio base station, radio measurement unit (e.g., location measurement unit) and radio beacon devices.The respective radio base station 12,13,15, which are examples of radio network nodes, may also be referred to as e.g. a NodeB, an evolved Node B (eNB, eNode B), a base transceiver station, Access Point Base Station, base station router, or any other network unit capable to communicate with a user equipment 10 within the cells 11,14,16 depending e.g. of the radio access technology and terminology used. Also, the respective radio base station 12,13,15 may further serve one or more cells and the radio network node serving the user equipment 10 may further be exemplified as a relay node or a beacon node.

According to embodiments herein the user equipment 10 is e.g. moving from the first cell 11 towards the second cell 14 and, at the same time, during or just before, a positioning of the user equipment 10 is requested. It has been part of the solution to find out that the user equipment 10, after cell change, samples and measures a signal for a new serving cell, i.e. the second cell 14, and reports the measurement for the second cell 14, whilst the radio base station 12 may not be aware of this cell change. Furthermore, the user equipment 10 may accumulate a signal from the old serving cell, i.e. the first cell 11, and then a signal from the second cell 14 for the same measurement. This will cause severe ambiguity in the measurement results, which in turn will translate into the determination of the position of the user equipment 10 with large uncertainty. Additionally, the positioning node 17 may receive information, e.g. from another network node, that the serving cell has changed for the user equipment 10, whilst the positioning node 17 still receives and processes the measurement at least partially based on measuring signals in the first cell 11. In either case, the final position of the user equipment 10 may be wrongly calculated, especially when the locations of the first radio base station 12 and the second radio base stations 13 are different or the transmit timing is not exactly the same for the two cells 11,14.

According to embodiments herein this is solved by postponing either the cell change process, e.g. handover, cell reselection or any type of the cell change process, or the positioning session, e.g. OTDOA session, E-CID session or similar, until the other one is finished. One could also state to postpone or delay one of the positioning session and the cell change process to the second cell 14 relative one another when performing cell change process and the positioning session. For example, when the cell change process is on-going, the user equipment 10 may postpone the positioning session and/or a measurement session for positioning until the cell change process is over. Postponing a positioning session may mean delaying the initiation of the positioning session, delaying the re-initiation of the positioning session or delaying a measurement procedure. Similarly, when a positioning session is on-going and a cell change command is received by the user equipment 10, the user equipment 10 may postpone the cell change process. Such positioning session may comprise OTDOA or E-CID process. For example, for enabling positioning of the user equipment 10 in the radio communications network the positioning node 17 may determine at least one cell for which timing information, such as a System Frame Number (SFN), is known or can be obtained by the user equipment 10. Then, the positioning node 17 generates a message comprising positioning assistance data, which positioning assistance data comprises information associated with the at least one cell. The information may be represented by the at least one cell, e.g. cell identity, or other information identifying the at least one cell. The information may be transmitted in a separate information element e.g. in an information element of a LTE Positioning Protocol (LPP). The at least one cell may be indicated as a reference cell or in a neighbour cell list in e.g. an Observed Time Difference of Arrival (OTDOA) assistance data. The positioning assistance data may also be referred to as assistance data and enable the user equipment 10 to perform positioning measurements. Furthermore, the positioning node 17 transmits the message to the user equipment 10 to be used for positioning the user equipment 10. In the illustrated example the first cell 11 serving the user equipment 10 is not a reference cell in the positioning assistance data, however, the reference cell in the positioning assistance data may be the cell serving the user equipment 10. As stated above, the positioning node 17 may delay e.g. the initiation of the positioning session for the particular user equipment 10 as there is e.g. an on-going handover procedure. Hence the positioning node 17 may send a positioning request to the user equipment 10 after the handover is completed.

As the positioning session is postponed relative the cell change process, the positioning of the user equipment will be accurate as the serving cell does not change during the positioning session.

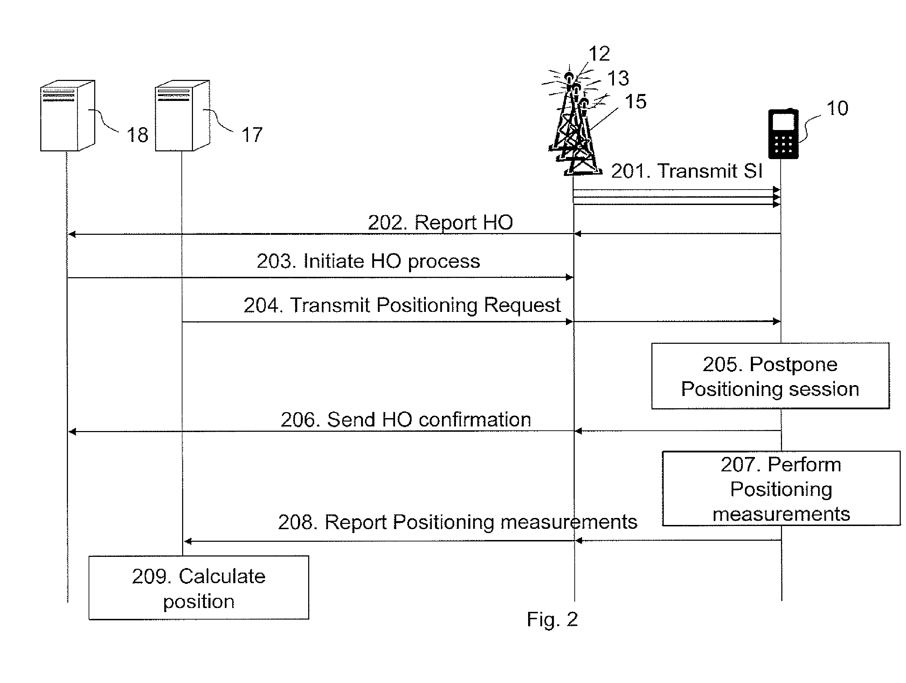

**Fig. 2** is a schematic combined flowchart and signalling scheme in a radio communications network. The steps do not have to be taken in the order stated below, but may be taken in any suitable order.

**Step 201.** Each radio base station 12,13,15 broadcasts and transmits reference signals carrying System Information (Si) or similar providing radio coverage over geographical areas. The user equipment 10 is served in the first cell 11 but moves towards the second cell 14, and continuously measures signal strengths of received reference signals. The user equipment 10 may periodically report signal strengths in measurement reports or may report the signal strengths when a criterion is met, e.g. the signal strength of the second cell 14 is stronger than the signal strength of the first cell 11 a certain amount.

**Step 202.** The user equipment 10 may report signal strengths that indicate a cell change process, in the illustrated example a handover (HO), to the first radio base station 12. The first radio base station 12 then initiates the handover e.g. by reporting the signals strengths to the MME 18.

**Step 203.** The MME 18 may initiate the handover process by communicating with a second MME, the second radio base station 13, and/or the first radio base station 12.

**Step 204.** During the cell change process, the positioning node 17 may send a positioning request to the user equipment 10, which positioning request may further comprise positioning assistance data. The positioning assistance data may comprise system or measurement bandwidth of the second cell 14, bandwidth of a Positioning Reference Signal (PRS) of the second cell 14, periodicity of the PRS in the second cell 14, expected Reference Signal Time Difference (RSTD), RSTD uncertainty, and other information relating to the positioning involving the second cell 14. The positioning assistance data may be used to assist when measuring time difference of arrival of different reference signals of the cells comprised in the positioning assistance data. The request with the positioning assistance data may be triggered to be generated by a location service initiation from the MME 18 but may also be requested by the user equipment 10. For example, the MME 18 or the user equipment 10 may initiate a service to position the user equipment 10, i.e. a geographical location of the user equipment 10 is requested. The positioning node 17 may then receive an order from the MME 18 or the user equipment 10 to position the user equipment 10.

**Step 205.** When cell change process such as the handover is on-going, the user equipment 10 may decide to postpone positioning session e.g. delaying a measurement procedure for positioning or measurement reporting, until the handover is over. In some embodiments, the positioning session may be postponed for a specific positioning session e.g. E-CID, specific positioning measurements e.g. UE Rx-Tx time difference, or positioning services e.g. when the on-going session is not related to the emergency calls.

In another embodiment, the positioning session may be or may not be postponed, depending on the type of handover. For example, the user equipment 10 defers or delays the positioning measurement session if there is an on-going intra-frequency handover wherein the frequency remains the same but does not defer the positioning session when there is an inter-Radio Access Technology (RAT) handover e.g. E-UTRA to UTRA handover. This is because the intra-frequency handover may be considered more critical than the remaining types of handovers. 'Intra-' means between the same RAT or frequency and 'inter-' means between different RATs or frequencies. A positioning session may be postponed depending on the combination of the factors above. An indicator of the delay or stop, or an abort or failure message may be sent to the first radio base station 12 when the positioning session is stopped or delayed. Also, when a positioning measurement session has been delayed, an indication of this and possible also the reason may be sent by the user equipment 10 to the network e.g. the positioning node 17.

**Step 206.** The user equipment 10 may finalize the handover by sending a handover confirmation. The handover confirmation may be forwarded to the MME 18.

**Step 207.** The user equipment 10 may then after the cell change process is finished perform the positioning measurements on each cell. For example, the user equipment 10 performs a positioning measurement using the positioning assistance data in the request and timing information of the new serving cell e.g. the second cell 14, to enable positioning of the user equipment 10. The user equipment 10 may then perform corresponding positioning measurements of the second cell 14 and the third cell 16. A possibility to postpone a measurement implies also at least a possibility of a later reporting of the measurement result.

**Step 208.** The user equipment 10 may then report the positioning measurement/s back to the positioning node 17 via the second radio base station 13.

**Step 209.** The positioning node 17 may then, based on the received positioning measurements, calculate the position of the user equipment 10. Alternatively or additionally, the user equipment 10 may calculate the position and report the position back to the second radio base station 13, e.g. in UE-based OTDOA embodiments.

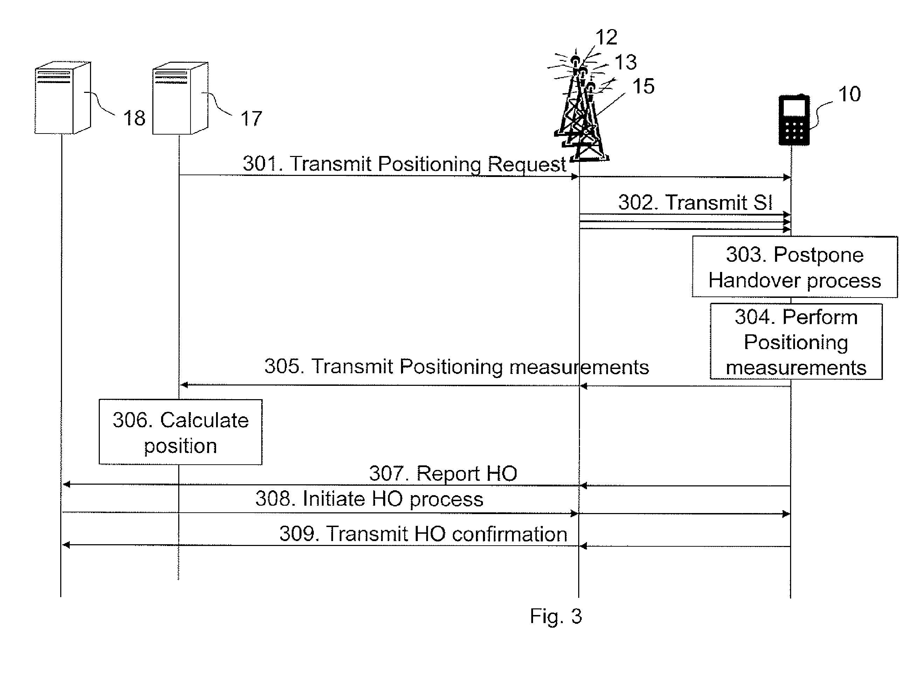

**Fig. 3** is a schematic combined flowchart and signalling scheme in a radio communications network. The steps do not have to be taken in the order stated below, but may be taken in any suitable order.

**Step 301.** The positioning node 17 may send a positioning request to the user equipment 10 via the first radio base station 12. This step corresponds to the step 204 in Fig. 2.

**Step 302.** Each radio base station 12,13,15 broadcasts and transmits reference signals carrying system information (SI) or similar providing radio coverage over geographical areas. The user equipment 10 is served in the first cell 11 but moves towards the second cell 14, and continuously measures signal strengths of received reference signals. This step corresponds to the step 201 in Fig. 2. Signal strengths difference may be reported to the network, e.g. the first radio base station 12 or second radio base station 13, and when decision in the network is made e.g. the first and second radio base stations 12,13 decide based on signal strengths difference and available resources, a handover command may be sent to the user equipment 10.

**Step 303.** When a positioning session is on-going and a cell change request e.g. a handover command, is received by the user equipment 10, the user equipment 10 may decide to take one or more actions, which may either be pre-defined or pre-configured by the network node, e.g. positioning node 17 or a radio network node 12,13, and in the user equipment 10 via signaling. For example, the user equipment 10 may postpone the cell change process, such as the handover process, until time T0 and may possibly indicate this and the reason to the network e.g. the first radio base station 12 or second radio base station 13. The time T0 may be pre-defined or configured by the network node or may correspond to the end of the on-going positioning session. The user equipment 10 may also postpone the cell change process only for a specific positioning session e.g. based on type of positioning technique such as E-CID. In some embodiments the user equipment may postpone the cell change for specific positioning measurements, e.g. UE Rx-Tx time difference; and/or for a certain type of positioning services e.g. when the on-going positioning session is related to the emergency calls.

The user equipment 10 may also postpone the handover session as above but only if the handover is of a certain type, e.g. intra-frequency, inter-frequency, intra-RAT or inter-RAT, or occurs due to a certain reason. This is e.g. because intra-frequency handover may be more important because the user equipment 10 may lose coverage, whilst inter-RAT handover is often done for the purpose of load balancing, e.g. when multiple RATs are co-located. Furthermore, changing frequency in an inter-frequency handover or changing RAT in an inter-RAT handover may require reconfiguring or configuring of new measurement gaps. In some embodiments, the decision to postpone handover may be based on any combination of the above. Thus, the parameters, e.g. a specific measurement and a specific handover type, may be considered jointly.

**Step 304.** The user equipment 10 may then perform the positioning measurements on each cell. For example, the user equipment 10 performs a positioning measurement using the positioning assistance data in the positioning request and timing information of the serving cell e.g. the first cell 11, to enable positioning of the user equipment 10. The user equipment 10 may then perform corresponding positioning measurements of the second cell 14 and the third cell 16.

**Step 305.** The user equipment 10 may then report by transmitting the positioning measurement/s back to the positioning node 17 via the first radio base station 12.

**Step 306.** The positioning node 17 may then, based on the received positioning measurements, calculate the position of the user equipment 10. Alternatively or additionally, the user equipment 10 may calculate the position and report the position back to the first radio base station 12, e.g. in UE-based OTDOA embodiments.

**Step 307.** The user equipment 10 may then when the positioning session is over continue with the cell change process e.g. by sending an updated measurement report of signal strengths indicating a cell change up to the MME 18 via the first radio base station 12.

**Step 308.** The MME 18 may then initiate handover and then send a handover command to the user equipment 10.

**Step 309.** The user equipment 10 connects to the second cell 14 and transmits a handover confirmation to the MME 18.

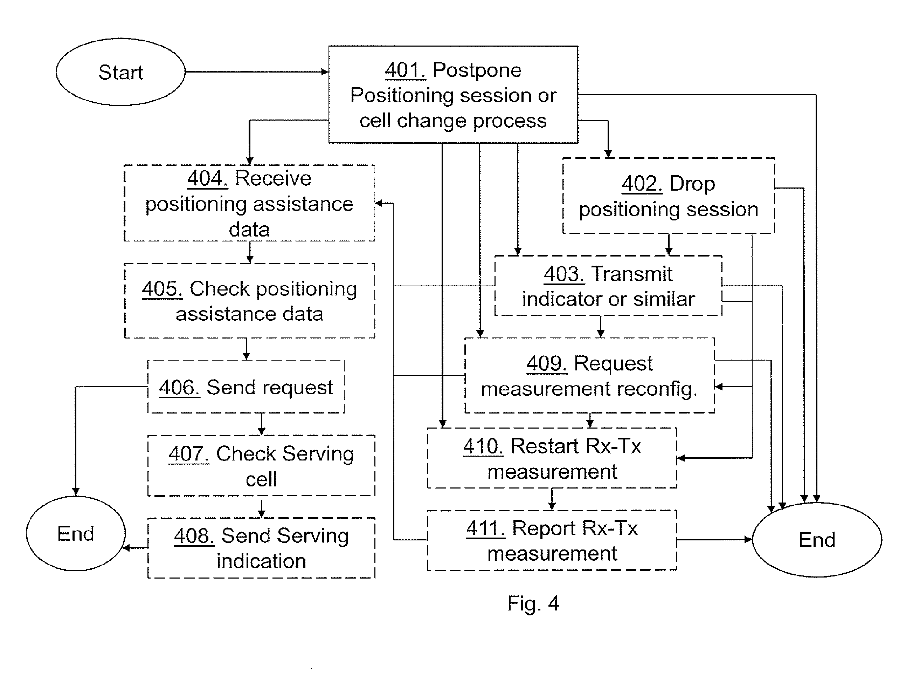

The method steps in the user equipment 10, for handling cell change in a radio communications network according to some general embodiments will now be described with reference to a flowchart depicted in **Fig. 4****.** The steps do not have to be taken in the order stated below, but may be taken in any suitable order. The user equipment 10 is served by at least a first cell 11 controlled by a radio network node 12. The steps that are performed only in some of the embodiments are indicated with dashed boxes in Fig. 4.

**Step 401.** The user equipment 10, when to perform a cell change process to a second cell 14 and a positioning session of the user equipment 10, postpones one of the positioning session and the cell change process relative one another.

In some embodiments when the cell change process is on-going, the user equipment postpones the positioning session until the cell change process is over. The positioning session may comprise a measurement procedure for positioning and a measurement reporting, and the postponing of the positioning session may comprise to delay at least one of the measurement procedure and the measurement reporting. Postponing a positioning session may thus mean delaying the initiation of the positioning session, delaying the re-initiation of the positioning session or delaying a measurement procedure.

In some embodiments, when the positioning session is on-going and a cell change command, e.g. handover command, is received by the user equipment 10, the user equipment 10 may postpone the handover process until a first time T0. The first time T0 may be pre-defined or configured by the positioning node 17, or correspond to the end of the on-going positioning session.

The user equipment 10 may postpone for a specific type of positioning session, a specific type of positioning measurements of the positioning session, or a specific type of positioning services of the positioning session and/or depending on a type of cell change process.

**Step 402.** In some embodiments the user equipment 10 may drop the on-going positioning session or the measurement session for a specific positioning method or specific measurement. Thus, the user equipment 10 may postpone the positioning session by dropping the on-going positioning session or the measurement process for a specific positioning method, e.g., OTDOA or E-CID when UE Rx-Tx has been requested, or for specific measurement e.g. UE Rx-Tx in E-CID. Furthermore, the user equipment 10 may abort the positioning session, i.e. send an abort message to a network node, e.g. positioning node, E-SMLC or SLP in LTE to stop the positioning session.

**Step 403.** The user equipment 10 may transmit an indicator, an abort message, or a failure message to a positioning node 17 when the positioning session is postponed. Furthermore, the user equipment 10, when the measurement session is postponed, may transmit an indication of this and a reason to the positioning node 17. The user equipment 10 may send a descriptive abort message to a network node, e.g. positioning node 17, E-SMLC or SLP in LTE, e.g. indicating the reason such as 'handover', 'intra-frequency handover', 'inter-frequency handover', or similar.

**Step 404.** The user equipment 10 may receive positioning assistance data from a positioning node 17. The positioning assistance data and a system frame number of at least one cell in the positioning assistance data is to be used when to perform a positioning measurement. The positioning assistance data may comprise an indication of a cell serving the user equipment 10. Upon receiving the positioning assistance data, the user equipment 10 may check whether the serving cell is still the same as indicated in the positioning assistance data. If the serving cell has changed the user equipment 10 behaviour may be pre-defined as stated below.

**Step 405.** The user equipment 10 may check, after the cell change process is performed, that the second cell 14 is in the received positioning assistance data. Thus, the user equipment 10 may check whether the new serving cell is still in the available assistance data.

**Step 406.** The user equipment 10 may then send, when the second cell 14 is not in the positioning assistance data, a request for the positioning assistance data of the second cell 14 only to the positioning node 17. Hence, at handover (HO), the user equipment 10 actually receives the PCI and earfcn of the new cell in the handover command. So, according to some embodiments, the user equipment 10 may be able to know whether it should request new positioning assistance data or not. When the new serving cell is not in the previous positioning assistance data provided, the user equipment 10 may request new assistance data and the message used may be the normal assistance data request.

**Step 407.** The user equipment 10 may check, after the cell change process is performed, that the indication in the received positioning assistance data indicates the second cell 14 as the cell serving the user equipment 10.

**Step 408.** The user equipment 10 may send, when the second cell 14 is not indicated in the positioning assistance data as the cell serving the user equipment 10, a serving indication indicating that the second cell 14 is the cell serving the user equipment 10 to the positioning node 17.

Thus, in some embodiments, the user equipment 10 may indicate serving cell to the radio base station 12. In case the user equipment 10 identifies the serving cell change, there is currently no specified way to indicate this to the network e.g. positioning node 17. Either the case when the user equipment 10 requests new assistance data or aborting the positioning session imply at least one of degraded positioning performance, longer total time for obtaining the final position, significant impact on the emergency positioning. Furthermore, by sending a serving cell indication to the positioning node 17, the positioning node 17 is informed about the cause and may conclude how much and which parts of the positioning assistance data need to be updated or whether another positioning method may be selected. That is, in some embodiments the positioning node 17 may "remember" or store a serving cell information. The serving cell information may be obtained e.g. via Cell ID request from radio base station, e.g. the first radio base station 12. Upon receiving a failure indicator with a handover-related reason indication or an assistance data request with the same reasoning, the positioning node 17 may regenerate or update the assistance data, while ensuring the serving cell is included in the list). In some embodiments, the positioning node 17 sends the user equipment 10 the positioning assistance data comprising the information about the new serving cell only.

Upon receiving the positioning assistance data, the user equipment 10 may check whether the serving cell is still the same as indicated in the positioning assistance data. If the serving cell has changed the user equipment behavior may be pre-defined. For example, the user equipment 10 may check whether the new serving cell is still in the available positioning assistance data and if it is not the user equipment 10 may send a request for the positioning assistance data, e.g. only for the new serving cell. If the frequency has also changed with the changing of the serving cell, the user equipment 10 may request measurement configuration or reconfiguration if the user equipment 10 is not capable of measuring on that frequency without measurement gaps. The user equipment 10 may send such a request to a network node e.g., positioning node 17, or a radio network node, e.g. the second radio base station 13 or femto gateway. A request may also contain an 'inter-frequency handover' indicator. The user equipment 10 may also send a descriptive abort message to a network node, e.g. the positioning node 17.

At HO, the user equipment 10 actually receives the PCI and earfcn of the second cell 14 in a HO command. So, according to some embodiments, the user equipment 10 is able to know whether the user equipment 10 should request for new positioning assistance data or not. If the new serving cell, i.e. the second cell 14, is not in the previous positioning assistance data provided, the user equipment 10 may request new positioning assistance data and the message used may be the normal assistance data request.

**Step 409.** When the user equipment 10 changes cell to the second cell 14, which second cell 14 operates at least partly over a different frequency band than the first cell 11, the user equipment 10 may request measurement reconfiguration when the user equipment 10 is not capable of measuring on that different frequency band without measurement gaps. Thus, when the frequency has also changed with changing the serving cell, the user equipment 10 may request measurement reconfiguration if the user equipment 10 is not capable of measuring on that frequency without measurement gaps, e.g. by sending an 'inter-frequency handover' indicator or sending a descriptive abort message to the network node.

**Step 410.** The user equipment 10 may change from the first cell to the second cell, and then restart performing Rx-Tx measurements on the second cell after the cell change process to the second cell 14. The Rx-Tx measurement covers both UE Rx-Tx and radio base station Rx-Tx and also TA Type 1, which involves both UE and radio base station Rx-TX. For example, some UE measurements are also available in first radio base station 12, e.g. UE Rx-Tx time differences. However, the UE Rx-Tx time difference is only defined for the serving cell, so the user equipment measurement cannot continue after the serving cell changes. So, in some embodiments, the user equipment 10 may restart the Rx-Tx measurement after the cell change e.g. handover, and report it only for the new serving cell. If the measurement quality is below a certain level, the measurement shall not be reported by the user equipment 10 or it may be reported with the quality metric. Alternatively, the user equipment 10 may decide to not include the quality metric if the measurement has a low quality and the likely reason is handover, and thus insufficient measurement time; not including the metric but reporting the measurement the positioning node 17 may interpret in a pre-defined way, e.g. that the measurement has been disturbed e.g. by handover.

**Step 411.** The user equipment 10 may report the Rx-Tx measurements only for the second cell 14 serving the user equipment 10.

The first cell 11 may be the serving cell initially serving the user equipment 10 and second cell 14 may be the neighbour cell before the cell change. The cell change process may be represented by a handover process, a cell reselection process, or a primary cell change. The first cell 11 may be a primary cell and the second cell 14 may be a secondary cell in a multi-carrier system.

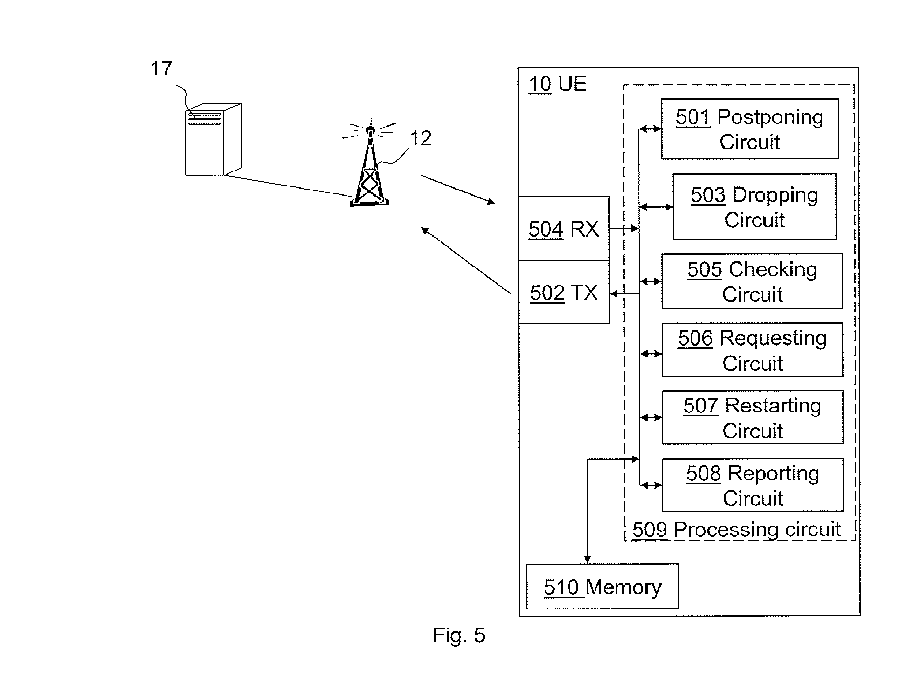

**FIG.5** is a block diagram depicting a user equipment for handling cell change in a radio communications network. The user equipment 10 is arranged to be served by at least a first cell 11 controlled by a radio network node 12. The user equipment 10 comprises **a postponing circuit 501** configured to postpone one of a positioning session and a cell change process to a second cell 14 relative to one another when performing the cell change process and the positioning session of the user equipment 10. In some embodiments the cell change process may be on-going, and the postponing circuit 501 is configured to postpone the positioning session until the cell change process is over. In some embodiments, the positioning session comprises a measurement procedure for positioning measurement, and the postponing circuit 501 is configured to postpone the positioning session by delaying the measurement procedure. In some embodiments when the positioning session is on-going and a cell change command is received by the user equipment 10, the postponing circuit 501 is configured to postpone the cell change process a first time T0. The first time T0 may be pre-defined or configured by a positioning node 17, or may correspond to the end of the on-going positioning session. The postponing circuit 501 may further be configured to postpone positioning session or cell change process based on a specific type of positioning session, a specific type of positioning measurements of the positioning session, or a specific type of positioning services associated with the positioning session. The postponing circuit (501) may furthermore be configured to postpone positioning session or cell change process depending on a type of cell change process.

The user equipment 10 may further comprise **a transmitter (TX) 502** configured to transmit an indicator, an abort message, or a failure message to a positioning node 17 when the positioning session is postponed.

The user equipment 10 may further comprise **a dropping circuit 503** configured to drop the on-going positioning session or a measurement process for a specific positioning method.

The user equipment 10 may further comprise **a receiver (RX) 504** configured to receive a positioning assistance data from a positioning node 17, which positioning assistance data and a system frame number of at least one cell in the positioning assistance data is to be used when to perform a positioning measurement.

The user equipment 10 may further comprise **a checking circuit 505** configured to check after the cell change process is performed, that the second cell 14 is in the received positioning assistance data.

The transmitter 502 may further be configured to transmit, when the second cell 14 is not in the positioning assistance data, a request for the positioning assistance data of the second cell 14 only to the positioning node 17.

The positioning assistance data may comprise an indication of a cell serving the user equipment 10. The checking circuit 505 may in some embodiments further be configured to check, after the cell change process is performed, that the indication in the received positioning assistance data indicates the second cell 14 as the cell serving the user equipment 10. The transmitter 502 may then further be configured to transmit to the positioning node 17, when the second cell 14 is not indicated in the positioning assistance data as the cell serving the user equipment 10, a serving indication indicating that the second cell 14 is the cell serving the user equipment 10.

In some embodiments the user equipment 10 is arranged to change cell to the second cell 14, wherein the second cell 14 operates at least partly over a different frequency band than the first cell 11. The user equipment 10 may further comprise **a requesting circuit 506** configured to request for measurement reconfiguration when the users equipment 10 is not capable of measuring on that different frequency band without measurement gaps.

In some embodiments the user equipment 10 is arranged to change from the first cell 11 to the second cell 14. The user equipment 10 may further comprise **a restarting circuit 507** configured to restart performing Rx-Tx measurements on the second cell 14 after the cell change process to the second cell 14.

The user equipment 10 may furthermore comprise **a reporting circuit 508** configured to report the Rx-Tx measurements only for the second cell 14 serving the user equipment 10.

In some embodiments, the first cell 11 is a serving cell and the second cell 14 is a neighbour cell before the cell change. In some embodiments the first cell 11 is a primary cell and the second cell 14 is a secondary cell in a multi-carrier system. In some embodiments, the cell change process is represented by a handover process, a cell reselection process, or a primary cell change.

The embodiments herein for handling cell change in a radio communications network may be implemented through one or more processors, such as **a processing circuit 509** in the user equipment 10 depicted in Fig. 5, together with computer program code for performing the functions and/or method steps of the embodiments herein. The program code mentioned above may also be provided as a computer program product, for instance in the form of a data carrier carrying computer program code for performing embodiments herein when being loaded into the user equipment 10. One such carrier may be in the form of a CD ROM disc. It is however feasible with other data carriers such as a memory stick. The computer program code may furthermore be provided as pure program code on a server and downloaded to the user equipment 10.

The user equipment 10 may further comprise **a memory 510** that may comprise one or more memory units and may be used to store for example data such as UE Rx-Tx measurements, timing information, positioning assistance data, serving cell info, applications to perform the methods herein when being executed on the user equipment 10, and/or similar.

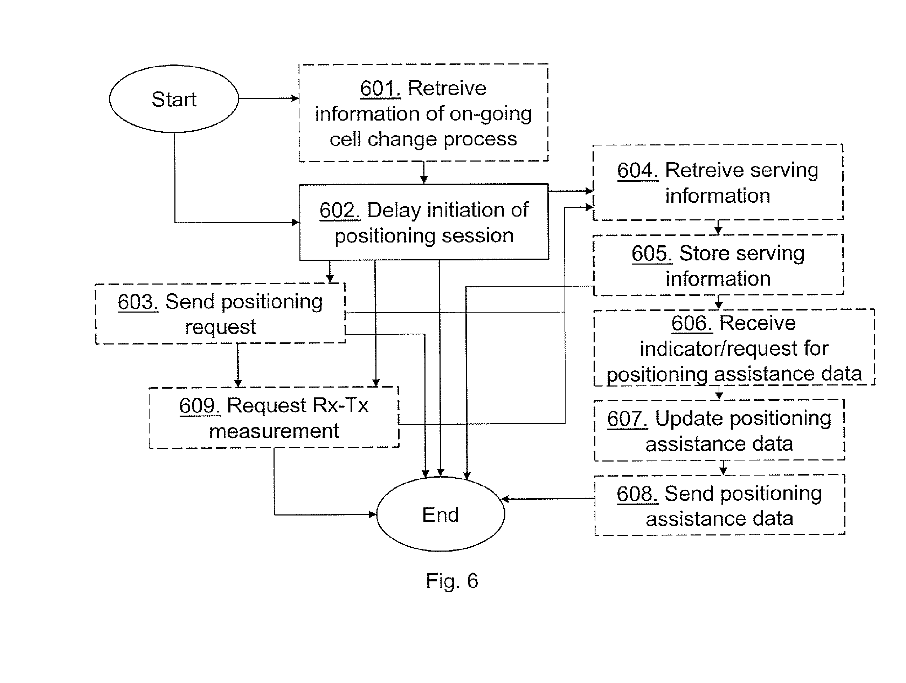

The method steps in network node, e.g. positioning node 17 or core network node, for handling cell change of the user equipment 10 between cells in a radio communications network according to some general embodiments will now be described with reference to a flowchart depicted in **Fig. 6****.** The steps do not have to be taken in the order stated below, but may be taken in any suitable order. The user equipment 10 is served by at least a first cell 11 controlled by a network node such as the first radio base station 12, the positioning node 17, or the MME 18. The steps that are performed in some embodiments are indicated with dashed boxes in Fig.6.

**Step 601.** The network node, e.g. the positioning node 17, may retrieve information that there is an on-going cell change process for the user equipment 10 and information about a type of the on-going cell change process for the user equipment 10 from a core network node e.g. MME 18 or a radio network node e.g. first radio base station 12 or second radio base station 13.

**Step 602.** The network node delays an initiation of a positioning session for the user equipment 10 in case there is an on-going cell change process of the user equipment 10. Initiation may also mean re-initiation of the positioning session during the cell change process. In some embodiments this is only performed when the positioning session is of low priority e.g. if it is not an emergency call. This may in some embodiments be performed based on a type of the cell change process. For example, the positioning node 17 may delay the initiation of the positioning session for the user equipment 10 during the cell change procedure, e.g. a handover procedure, depending upon the type of cell change. E.g. the positioning node 17 may delay the initiation of the positioning session provided if it is an intra-frequency handover. On the other hand the positioning node 17 may not delay the positioning session if the on-going handover is inter-RAT handover. This is because the intra-frequency handover is more fundamental and critical compared to inter-RAT and even inter-frequency handovers. In some embodiments wherein the network node is represented by a core network node, e.g. the MME 18, the core network node may delay the initiation by delaying a transmission of a positioning request for the user equipment 10 to the positioning node 17.

**Step 603.** The network node may then send a positioning request to the user equipment 10 after the cell change process is completed.

**Step 604.** The network node may retrieve information about which cell is serving the user equipment 10.

**Step 605.** The network node may store the cell as a cell serving the user equipment 10.

**Step 606.** The network node may receive an indicator of a failure with a cell change-related reason indication or a request for positioning assistance data with the cell change related reason indication.

**Step 607.** The network node may then update the positioning assistance data, while ensuring the serving cell is included in the positioning assistance data.

**Step 608.** The network node may send the updated positioning assistance data comprising the information about the serving cell.

**Step 609.** The network node may request, from the radio network node 12,13 serving the user equipment 10, Rx-Tx measurement from the user equipment 10 when received Rx-Tx measurement is classified as non-reliable or is not received at all.

Thus, in some embodiments, a core network node e.g. MME 18, may request the positioning node 17 to initiate the positioning session. According to these embodiments the MME 18 may decide to delay sending a positioning request to the positioning node 17 for the user equipment 10 when there is an on-going handover procedure for the user equipment 10 e.g. at S1 HO. The positioning request may be delayed until the handover procedure is completed. In some embodiments the positioning request for positioning sent to the positioning node 17 may be delayed until the handover procedure is completed only for a particular type of handover e.g. the positioning request is delayed only for intra-frequency handover but not for inter-RAT handover. In some embodiments the positioning request for positioning sent to the positioning node 17 may be delayed until the handover procedure is completed only for a particular type of the positioning session. For example, the positioning request is delayed only if there is no time critical positioning service such as emergency call i.e. the positioning request is not delayed if there is an emergency call involving location determination.

In some of the previous embodiments the positioning node 17 may have means to include indicator of the cell serving the user equipment 10 and its related information in the positioning assistance data. The positioning assistance data is signalled by the positioning node 17 to the user equipment 10 for performing the positioning measurements. There may be different ways of obtaining the serving cell information by the positioning node 17.

It should be understood that in some embodiments the positioning node 17 may obtain the information about the serving cell of the user equipment 10 from different sources/nodes. The information of the serving cell may correspond to the; present serving cell of the user equipment 10; serving cell of the user equipment 10 after the cell change; or both. In the last two cases the network may be in process of performing a cell change. In case of multi-carrier systems, also known as carrier aggregation, in which the user equipment is able to receive and/or transmit data over more than one carrier simultaneously, there are more than one serving cells e.g. one primary cell and one or more secondary cells, for the user equipment 10. Hence according to embodiments herein in case of the multi-carrier system the positioning node 17 may acquire information for the user equipment 10 either about all its serving cells, at least the primary serving cell, or at least the serving and N best secondary cells, which can be potential primary cells.

The positioning node 17 may obtain the serving cell information by, for example, acquiring the serving cell information, also applies for the multi-carrier system with primary and secondary cells, from the core network node e.g. MME 18, which contains UE mobility context or information. The MME 18 may proactively provide the serving cell information of all user equipments or a sub-set of user equipments to the positioning node 17. The MME 18 may also provide this information to the positioning node 17 upon receiving an explicit request from the positioning node 17. The serving cell information may also be provided when triggered by an event, e.g. changed serving cell for the user equipment 10. Yet another way is that MME 18 provides the serving cell information to the positioning node 17 together with the positioning request. In some embodiments, the positioning node 17 may acquire the serving cell information, this also applies for the multi-carrier system, from the radio network node e.g. sent over the LPPa by the first radio base station 12 or the new serving second radio base station 13. The radio network node, e.g. the first or second radio base station 12,13, may contain UE mobility context or information and also perform the cell change. The second radio base station 13 or any radio network node which has the information of the serving cell of the user equipment 10 may proactively provide the serving cell information of all user equipments or sub-set of user equipments to the positioning node 17. The radio network node may also provide the serving cell information to the positioning node 17 upon receiving an explicit request from the positioning node 17 or at the UE handover. For example, the second radio base station 13 may provide identifiers of all user equipments served by itself to the positioning node 17. In some embodiments, the positioning node 17 may acquire the serving cell information, also applies for the multi-carrier system, from the user equipment 10 just after the cell change process or anytime during the cell change process in case serving cell changes. For example, the user equipment 10 may inform the positioning node 17 e.g. over LPP about the completed handover.

In some embodiments, the positioning node 17 may request the UE Rx-Tx measurement from the current serving radio base station, e.g. the second radio base station 13, when the measurement reported by the user equipment 10 is classified as non-reliable, e.g. it has low quality or some indication has been received, e.g. missing quality metric in the measurement report or received HO-occurred indicator from either a network node or the user equipment 10, or is not received in the measurement report while being requested. The positioning node 17 may also have a possibility to request Type 1 and Type 2 TA measurements and with these deduce the UE Rx-Tx measurement.

Embodiments herein provide a smooth cell change process with an accurate positioning of the user equipment 10.

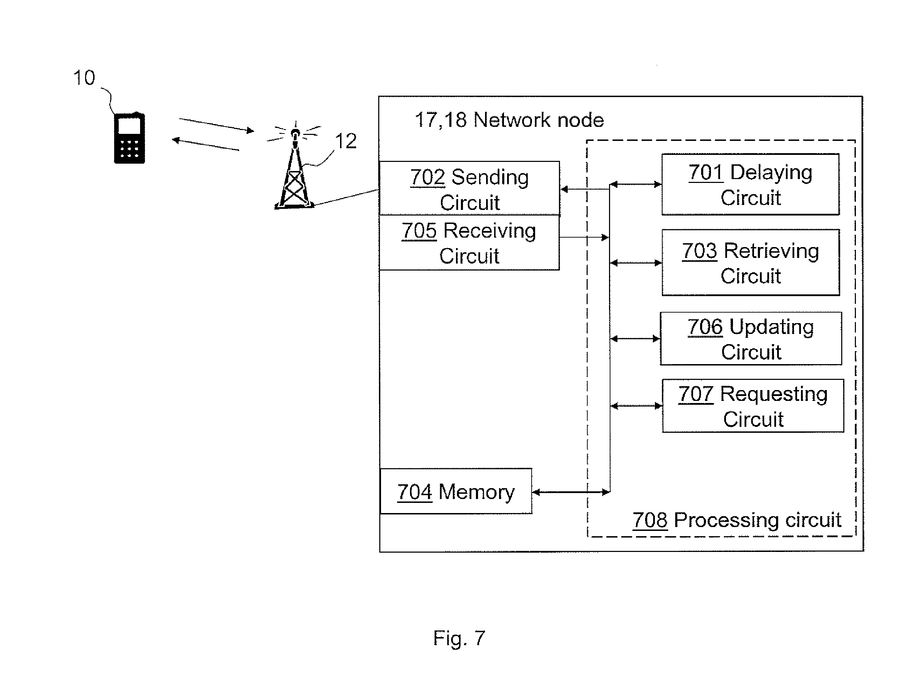

**FIG.7** is a block diagram depicting a network node such, as the first radio base station 12, the positioning node or the core network node such as the MME 18, for handling cell change of a user equipment 10 between cells, e.g. between first cell 11 and second cell 14, in the radio communications network. The user equipment 10 is served in the first cell 11 controlled by the network node 12,17,18.

The network node 12,17,18 comprises **a delaying circuit 701** configured to delay an initiation of a positioning session for the user equipment 10 in case there is an on-going cell change process of the user equipment 10. The delaying circuit 701 may in some embodiments be configured to perform the delaying only when the positioning session is of low priority. Furthermore, the delaying circuit 701 may be configured to perform the delaying based on a type of the cell change process.

The network node 12,17,18 may in some embodiments further comprise **a sending circuit 702** configured to send a positioning request to the user equipment 10 after the cell change process is completed.

The network node 12,17,18 may in some embodiments further comprise **a retrieving circuit 703** configured to retrieve information that there is an on-going cell change process for the user equipment 10. The retrieving circuit 703 may further be configured to retrieve information about a type of the on-going cell change process for the user equipment 10 from a core network node, e.g. MME 18, or a radio network node, e.g. the first or second radio base station. The retrieving circuit 703 may in some embodiments further be configured to retrieve information about which cell is serving the user equipment 10.

The network node 12,17,18 may further comprises **a memory 704** configured to be used to store the cell as a cell serving the user equipment 10. The memory 704 may comprise one or more memory units and may be used to store for example data such as positioning assistance data, serving cell information, cell information, positioning information, applications to perform the methods herein when being executed on the network node, and/or similar.

The network node 12,17,18 may in some embodiments further comprise **a receiving circuit 705** configured to receive an indicator of a failure with a cell change-related reason indication or a request for positioning assistance data with the cell change-related reason indication.

Furthermore, the network node 12,17,18 may comprise **an updating circuit 706** configured to update the positioning assistance data, while ensuring the serving cell is included in the positioning assistance data. The sending circuit 702 may then be configured to send the updated positioning assistance data comprising the information about the serving cell.

The network node 12,17,18 may in some embodiments further comprise **a requesting circuit 707** configured to request from a radio network node 12,13 serving the user equipment 10, Rx-Tx measurement from the user equipment 10 when received Rx-Tx measurement is classified as non-reliable or is not received at all.

The network node may be represented by the positioning node 17. In addition, the network node may be represented by the core network node and then the delaying circuit 701 may be configured to delay the initiation of the positioning session be delaying a transmission of a positioning request for the user equipment 10 to the positioning node 17.

The embodiments herein for handling cell change of the user equipment 10 between cells may be implemented through one or more processors, such as **a processing circuit 708** in the network node depicted in Fig. 7, together with computer program code for performing the functions and/or method steps of the embodiments herein. The program code mentioned above may also be provided as a computer program product, for instance in the form of a data carrier carrying computer program code for performing embodiments herein when being loaded into the network node. One such carrier may be in the form of a CD ROM disc. It is however feasible with other data carriers such as a memory stick. The computer program code may furthermore be provided as pure program code on a server and downloaded to the network node.

Embodiments herein relate to:
- Methods and procedures in the UE ensuring reliable positioning session during handover or during any type of the cell change procedure including cell reselection,
- Methods and procedures in the network ensuring reliable positioning session during handover or during any type of cell change procedure e.g. cell change order,
- Positioning signaling enhanced with handover support,
- Specifying node 12,13 node behaviour,
- Methods for acquiring the serving cell information for a given UE at the positioning node.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the invention being defined by the following claims.

## Claims

1. A method in a user equipment (10) for handling cell change in a Long term Evolution network, which user equipment (10) is served by at least a first cell (11) controlled by a radio network node (12), the method comprises
- *Postponing* (205,303,401) a positioning session relative to a cell change process to a second cell (14) when to perform the cell change process and the positioning session of the user equipment (10), wherein the positioning session comprises a measurement procedure for positioning measurement, and the postponing of the positioning session comprises to delay the measurement procedure.

2. A method according to claim 1, when the cell change process is on-going, the *postponing* (205,401) comprises to postpone the positioning session until the cell change process is over.

3. A method according to any of claims 1-2, further comprising
- *transmitting* (403) an indicator, an abort message, or a failure message to a positioning node (17) when the positioning session is postponed.

4. A method according to any of claims 1-3, wherein the *postponing* (205,303,401) is performed for a specific type of positioning session, a specific type of positioning measurements of the positioning session, or a specific type of positioning services associated with the positioning session.

5. A method according to any of claims 1-4, wherein the *postponing* (205,303,401) is performed depending on a type of cell change.

6. A method according to any of the claims 1-5, further comprising
- *receiving* (404) positioning assistance data from a positioning node (17), which positioning assistance data and a system frame number of at least one cell in the positioning assistance data is to be used when to perform a positioning measurement,
- *checking* (405),after the cell change process is performed, that the second cell (14) is in the received positioning assistance data, and
- *sending* (406), when the second cell (14) is not in the positioning assistance data, a request for the positioning assistance data of the second cell (14) only to the positioning node (17).

7. A method according to claim 6, wherein the positioning assistance data comprises an indication of a cell serving the user equipment (10).

8. A method according to any of claims 6-7; further comprising
- *checking* (407), after the cell change process is performed, that the indication in the received positioning assistance data Indicates the second cell (14) as the cell serving the user equipment (10), and
- *sending* (406), when the second cell (14) is not indicated in the positioning assistance data as the cell serving the user equipment (10), a serving indication indicating that the second cell (14) is the cell serving the user equipment (10) to the positioning node (17).

9. A method according to any of the claims 1-8, wherein the user equipment (10) changes cell to the second cell (14), which second cell (14) operates at least partly over a different frequency band than the first cell (11); further comprising
- *requesting* (409) measurement reconfiguration when the users equipment (10) is not capable of measuring on that different frequency band without measurement gaps.

10. A method according to any of claims 1-9, wherein the user equipment (10) changes from the first cell (11) to the second cell (14), further comprising
- *restarting* (410) performing Rx-Tx measurements on the second cell (14) after the cell change process to the second cell (14), and
- *reporting* (411) the Rx-Tx measurements only for the second cell (14) serving the user equipment (10).

11. A method according to any of claims 1-10, wherein the first cell (11) is a serving cell and the second cell (14) is a neighbour cell before the cell change process.

12. A method according to any of claims 1-11, wherein the first cell (11) is a primary cell and the second cell (14) is a secondary cell in a multi-carrier system.

13. A method according to any of claims 1-12, wherein the cell change process is represented by a handover process, a cell reselection process, or a primary cell change.

14. A user equipment (10) for handling cell change in a Long Term Evolution network, which user equipment (10) is arranged to be served by at least a first cell (11) controlled by a radio network node (12), the user equipment (10) comprises
a postponing circuit (501) configured to postpone a positioning session relative to a cell change process to a second cell (14) when to perform the cell change process and the positioning session of the user equipment (10), wherein the positioning session comprises a measurement procedure for positioning measurement, and the postponing circuit (501) is configured to postpone the positioning session by delaying the measurement procedure.

15. A user equipment (10) according to claim 14, when the cell change process is on-going, the postponing circuit (501) is configured to postpone the positioning session until the cell change process is over.

16. A user equipment (10) according to any of claims 14-15, further comprising
a transmitter (502) configured to transmit an indicator, an abort message, or a failure message to a positioning node (17) when the positioning session is postponed.

17. A user equipment (10) according to any of claims 14-16, wherein the postponing circuit (501) is configured to postpone positioning session based on a specific type of positioning session, a specific type of positioning measurements of the positioning session, or a specific type of positioning services associated with the positioning session.

18. A user equipment (10) according to any of claims 14-17, wherein the postponing circuit (501) furthermore configured to postpone positioning session depending on a type of cell change process.

19. A user equipment (10) according to any of the claims 15-18, further comprising
a receiver (504) configured to receive a positioning assistance data from a positioning node (17), which positioning assistance data and a system frame number of at least one cell in the positioning assistance data is to be used when to perform a positioning measurement,
a checking circuit (505) configured to check after the cell change process is performed, that the second cell (14) is in the received positioning assistance data, and
a transmitter (502) configured to transmit when the second cell (14) is not in the positioning assistance data, a request for the positioning assistance data of the second cell (14) only to the positioning node (17).

20. A user equipment (10) according to claim 19, wherein the positioning assistance data comprises an indication of a cell serving the user equipment (10).

21. A user equipment (10) according to any of claims 19-20; wherein the checking circuit (505) is further configured to check, after the cell change process is performed, that the indication in the received positioning assistance data Indicates the second cell (14) as the cell serving the user equipment (10), and the transmitter (502) is further configured to transmit, when the second cell (14) is not indicated in the positioning assistance data as the cell serving the user equipment (10), a serving indication indicating that the second cell (14) is the cell serving the user equipment (10) to the positioning node (17).

22. A user equipment (10) according to any of the claims 14-21, wherein the user equipment (10) is arranged to change cell to the second cell (14), which second cell (14) operates at least partly over a different frequency band than the first cell (11); wherein the user equipment (10) further comprises a requesting circuit (606) configured to request for measurement reconfiguration when the users equipment (10) is not capable of measuring on that different frequency band without measurement gaps.

23. A user equipment (10) according to any of claims 14-22, wherein the user equipment (10) is arranged to change from the first cell (11) to the second cell (14); which user equipment (10) further comprises
a restarting circuit (507) configured to restart performing Rx-Tx measurements on the second cell (14) after the cell change process to the second cell (14), and
a reporting circuit (508) configured to report the Rx-Tx measurements only for the second cell (14) serving the user equipment (10).

24. A user equipment (10) according to any of claims 14-23, wherein the first cell (11) is a serving cell and the second cell (14) is a neighbour cell before the cell change process.

25. A user equipment (10) according to any of claims 14-24, wherein the first cell (11) is a primary cell and the second cell (14) is a secondary cell in a multi-carrier system.

26. A user equipment (10) according to any of claims 14-25, wherein the cell change process is represented by a handover process, a cell reselection process, or a primary cell change.

## Patentansprüche

1. Verfahren in einem Benutzergerät (10) für das Handhaben einer Zellenwechsels in einem Long-Term-Evolution-Netzwerk, wobei das Benutzergerät (10) durch mindestens eine erste Zelle (11) bedient wird, die durch einen Funknetzwerk-Knoten (12) gesteuert wird, wobei das Verfahren umfasst:
- Aufschieben (205, 303, 401) einer Positionierungssitzung bezüglich eines Zellenwechselprozesses zu einer zweiten Zelle (14) hin, wenn der Zellenwechselprozess und die Positionierungssitzung des Benutzergeräts (10) auszuführen sind, wobei die Positionierungssitzung einen Messvorgang für eine Positionierungsmessung umfasst und das Aufschieben der Positionierungssitzung eine Verzögerung des Messvorgangs umfasst.

2. Verfahren nach Anspruch 1, wobei das Aufschieben (205, 401) während des ablaufenden Zellenwechselprozesses umfasst, dass die Positionierungssitzung aufgeschoben wird, bis der Zellenwechselprozess abgeschlossen ist.

3. Verfahren nach einem der Ansprüche 1 - 2, ferner umfassend:
- Übermitteln (403) eines Anzeigers, einer Abbruchnachricht oder einer Fehlernachricht an einen Positionierungsknoten (17), wenn die Positionierungssitzung aufgeschoben wird.

4. Verfahren nach einem der Ansprüche 1 - 3, wobei das Aufschieben (205, 303, 401) für einen speziellen Typ einer Positionierungssitzung, einen speziellen Typ von Positionierungsmessungen der Positionierungssitzung oder einen speziellen Typ von Positionierungsdiensten ausgeführt wird, der mit der Positionierungssitzund verbunden ist.

5. Verfahren nach einem der Ansprüche 1 - 4, wobei Aufschieben (205, 303, 401) in Abhängigkeit von einem Typ des Zellenwechsels ausgeführt wird.

6. Verfahren nach einem der Ansprüche 1 - 5, ferner umfassend:
- Empfangen (404) von Positionierungsunterstützungsdaten von einem Positionierungsknoten (17), wobei die Positionierungsunterstützungsdaten und eine System-Framenummer von mindestens einer Zelle in den Positionierungsunterstützungsdaten zu verwenden sind, wenn eine Positionierungsmessung auszuführen ist,
- Überprüfen (405), dass die zweite Zelle (14) in den empfangenen Positionierungsunterstützungsdaten ist, nachdem der Zellenwechselprozess ausgeführt ist, und
- Senden (406) einer Anforderung nach den Positionierungsunterstützungsdaten der zweiten Zelle (14) nur an den Positionierungsknoten (17), wenn die zweite Zelle (14) nicht in den Positionierungsunterstützungsdaten ist.

7. Verfahren nach Anspruch 6, wobei die Positionierungsunterstützungsdaten eine Anzeige einer Zelle umfassen, die das Benutzergerät (10) bedient.

8. Verfahren nach einem der Ansprüche 6 - 7, ferner umfassend:
- Überprüfen (407), dass die Anzeige in den Positionierungsunterstützungsdaten die zweite Zelle (14) als die Zelle anzeigt, die das Benutzergerät (10) bedient, nachdem der Zellenwechselprozess ausgeführt ist, und
- Senden (408) einer Bedienungsanzeige an den Positionierungsknoten (17), die anzeigt, dass die zweite Zelle (14) die Zelle ist, die das Benutzergerät (10) bedient, wenn die zweite Zelle (14) in den Positionierungsunterstützungsdaten nicht als die Zelle angezeigt wird, die das Benutzergerät (10) bedient.

9. Verfahren nach einem der Ansprüche 1 - 8, wobei das Benutzergerät (10) die Zelle zur zweiten Zelle (14) hin wechselt, wobei die zweite Zelle (14) mindestens zum Teil über ein anderes Frequenzband läuft als die erste Zelle (11), ferner umfassend:
- Anfordern (409) einer Messungsumgestaltung, wenn das Benutzergerät (10) nicht in der Lage ist, auf diesem anderen Frequenzband ohne Messungslücken zu messen.

10. Verfahren nach einem der Ansprüche 1 - 9, wobei das Benutzergerät (10) von der ersten Zelle (11) zur zweiten Zelle (14) hin wechselt, ferner umfassend:
- Neustart (410), wobei nach dem Zellenwechselprozess zur zweiten Zelle (14) hin Rx-Tx-Messungen an der zweiten Zelle (14) ausgeführt werden, und
- Melden (411) der Rx-Tx-Messungen nur für die zweite Zelle (14), die das Benutzergerät (10) bedient.

11. Verfahren nach einem der Ansprüche 1 - 10, wobei vor dem Zellenwechselprozess die erste Zelle (11) eine bedienende Zelle und die zweite Zelle (14) eine Nachbarzelle ist.

12. Verfahren nach einem der Ansprüche 1 - 11, wobei die erste Zelle (11) eine Primärzelle und die zweite Zelle (14) eine Sekundärzelle in einem Mehrträgersystem ist.

13. Verfahren nach einem der Ansprüche 1 - 12, wobei der Zellenwechselprozess durch einen Übergabeprozess, einen Zellenneuauswahlprozess oder einen Primärzellenwechsel verkörpert wird.

14. Benutzergerät (10) für das Handhaben einer Zellenwechsels in einem Long-Term-Evolution-Netzwerk, wobei das Benutzergerät (10) angeordnet ist, durch mindestens eine erste Zelle (11) bedient zu werden, die durch einen Funknetzwerk-Knoten (12) gesteuert wird, wobei das Benutzergerät (10) aufweist:
eine Aufschiebe-Schaltung (501), die eingerichtet ist, eine Positionierungssitzung bezüglich eines Zellenwechselprozesses zu einer zweiten Zelle (14) hin aufzuschieben, wenn der Zellenwechselprozess und die Positionierungssitzung des Benutzergeräts (10) auszuführen sind, wobei die Positionierungssitzung einen Messvorgang für eine Positionierungsmessung umfasst und die Aufschiebe-Schaltung (501) eingerichtet ist, die Positionierungssitzung aufzuschieben, indem der Messvorgang verzögert wird.

15. Benutzergerät (10) nach Anspruch 14, wobei die Aufschiebe-Schaltung (501) während des ablaufenden Zellenwechselprozesses eingerichtet ist, die Positionierungssitzung aufzuschieben, bis der Zellenwechselprozess abgeschlossen ist.

16. Benutzergerät (10) nach einem der Ansprüche 14 - 15, ferner umfassend:
eine Übertragungseinrichtung (502), die eingerichtet ist, einen Anzeiger, eine Abbruchnachricht oder eine Fehlernachricht an einen Positionierungsknoten (17) zu übermitteln, wenn die Positionierungssitzung aufgeschoben wird.

17. Benutzergerät (10) nach einem der Ansprüche 14 - 16, wobei die Aufschiebe-Schaltung (501) eingerichtet ist, die Positionierungssitzung basierend auf einem speziellen Typ einer Positionierungssitzung, einem speziellen Typ von Positionierungsmessungen der Positionierungssitzung oder einem speziellen Typ von Positionierungsdiensten, der mit der Positionierungssitzung verbunden ist, aufzuschieben.

18. Benutzergerät (10) nach einem der Ansprüche 14 - 17, wobei die Aufschiebe-Schaltung (501) außerdem eingerichtet ist, die Positionierungssitzung in Abhängigkeit von einem Typ des Zellenwechselprozesses aufzuschieben.

19. Benutzergerät (10) nach einem der Ansprüche 15 - 18, ferner umfassend:
einen Empfänger (504), der eingerichtet ist, Positionierungsunterstützungsdaten von einem Positionierungsknoten (17) zu empfangen, wobei die Positionierungsunterstützungsdaten und eine System-Framenummer von mindestens einer Zelle in den Positionierungsunterstützungsdaten zu verwenden sind, wenn eine Positionierungsmessung auszuführen ist,
eine Überprüfungsschaltung (505), die eingerichtet ist zu prüfen, dass die zweite Zelle (14) in den empfangenen Positionierungsunterstützungsdaten ist, nachdem der Zellenwechselprozess ausgeführt ist, und
eine Übertragungseinrichtung (502), die eingerichtet ist, eine Anforderung nach den Positionierungsunterstützungsdaten der zweiten Zelle (14) nur an den Positionierungsknoten (17) zu übermitteln, wenn die zweite Zelle (14) nicht in den Positionierungsunterstützungsdaten ist.

20. Benutzergerät (10) nach Anspruch 19, wobei die Positionierungsunterstützungsdaten eine Anzeige einer Zelle umfassen, die das Benutzergerät (10) bedient.

21. Benutzergerät (10) nach einem der Ansprüche 19 - 20, wobei die Überprüfungsschaltung (505) ferner eingerichtet ist, zu prüfen, dass die Anzeige in den Positionierungsunterstützungsdaten die zweite Zelle (14) als die Zelle anzeigt, die das Benutzergerät (10) bedient, nachdem der Zellenwechselprozess ausgeführt ist, und die Übertragungseinrichtung (502) ferner eingerichtet ist, eine Bedienungsanzeige an den Positionierungsknoten (17) zu übermitteln, die anzeigt, dass die zweite Zelle (14) die Zelle ist, die das Benutzergerät (10) bedient, wenn die zweite Zelle (14) in den Positionierungsunterstützungsdaten nicht als die Zelle angezeigt wird, die das Benutzergerät (10) bedient.

22. Benutzergerät (10) nach einem der Ansprüche 14 - 21, wobei das Benutzergerät (10) angeordnet ist, die Zelle zur zweiten Zelle (14) hin zu wechseln, wobei die zweite Zelle (14) mindestens zum Teil über ein anderes Frequenzband läuft als die erste Zelle (11), wobei das Benutzergerät (10) ferner eine Anforderungsschaltung (506) aufweist, die eingerichtet ist, eine Messungsumgestaltung anzufordern, wenn das Benutzergerät (10) nicht in der Lage ist, auf diesem anderen Frequenzband ohne Messungslücken zu messen.

23. Benutzergerät (10) nach einem der Ansprüche 14 - 22, wobei das Benutzergerät (10) angeordnet ist, von der ersten Zelle (11) zur zweiten Zelle (14) hin zu wechseln, wobei das Benutzergerät (10) ferner aufweist:
eine Neustart-Schaltung (507), die eingerichtet ist, nach dem Zellenwechselprozess zur zweiten Zelle (14) hin einen Neustart auszuführen, wobei Rx-Tx-Messungen an der zweiten Zelle (14) ausgeführt werden, und
eine Meldeschaltung (508), die eingerichtet ist, die Rx-Tx-Messungen nur für die zweite Zelle (14) zu melden, die das Benutzergerät (10) bedient.

24. Benutzergerät (10) nach einem der Ansprüche 14 - 23, wobei vor dem Zellenwechselprozess die erste Zelle (11) eine bedienende Zelle und die zweite Zelle (14) eine Nachbarzelle ist.

25. Benutzergerät (10) nach einem der Ansprüche 14 - 24, wobei die erste Zelle (11) eine Primärzelle und die zweite Zelle (14) eine Sekundärzelle in einem Mehrträgersystem ist.

26. Benutzergerät (10) nach einem der Ansprüche 14 - 25, wobei der Zellenwechselprozess durch einen Übergabeprozess, einen Zellenneuauswahlprozess oder einen Primärzellenwechsel verkörpert wird.

## Revendications

1. Procédé dans un équipement d'utilisateur (10) pour prendre en charge un changement de cellule dans un réseau à évolution à long terme, lequel équipement d'utilisateur (10) est desservi par au moins une première cellule (11) contrôlée par un noeud de réseau radio (12), le procédé comprenant les étapes suivantes :
- reporter (205, 303, 401) une session de positionnement par rapport à un processus de changement de cellule vers une seconde cellule (14) au moment d'exécuter le processus de changement de cellule et la session de positionnement de l'équipement d'utilisateur (10), dans lequel la session de positionnement comprend une procédure de mesure pour une mesure de positionnement, et le report de la session de positionnement comprend de retarder la procédure de mesure.

2. Procédé selon la revendication 1, dans lequel, lorsque le processus de changement de cellule est en cours, le report (205, 401) comprend de reporter la session de positionnement jusqu'à ce que le processus de changement de cellule soit terminé.

3. Procédé selon l'une quelconque des revendications 1 à 2, comprenant en outre l'étape suivante :
- transmettre (403) un indicateur, un message d'interruption, ou un message d'échec à un noeud de positionnement (17) lorsque la session de positionnement est reportée.

4. Procédé selon l'une quelconque des revendications 1 à 3, dans lequel le report (205, 303, 401) est exécuté pour un type spécifique de session de positionnement, un type spécifique de mesures de positionnement de la session de positionnement, ou un type spécifique de services de positionnement associés à la session de positionnement.

5. Procédé selon l'une quelconque des revendications 1 à 4, dans lequel le report (205, 303, 401) est exécuté en fonction d'un type de changement de cellule.

6. Procédé selon l'une quelconque des revendications 1 à 5, comprenant en outre les étapes suivantes :
- recevoir (404) des données d'assistance de positionnement d'un noeud de positionnement (17), lesquelles données d'assistance de positionnement et un nombre de trame de système d'au moins une cellule dans les données d'assistance de positionnement sont à utiliser lors de l'exécution d'une mesure de positionnement.
- vérifier (405), après que le processus de changement de cellule a été exécuté, que la seconde cellule (14) se trouve dans les données d'assistance de positionnement reçues, et
- envoyer (406), lorsque la seconde cellule (14) ne se trouve pas dans les données d'assistance de positionnement, une demande pour les données d'assistance de positionnement de la seconde cellule (14) seulement au noeud de positionnement (17).

7. Procédé selon la revendication 6, dans lequel les données d'assistance de positionnement comprennent une indication d'une cellule desservant l'équipement d'utilisateur (10).

8. Procédé selon l'une quelconque des revendications 6 à 7, comprenant en outre les étapes suivantes :
- vérifier (407), après que le processus de changement de cellule a été exécuté, que l'indication dans les données d'assistance de positionnement reçues désigne la seconde cellule (14) comme la cellule desservant l'équipement d'utilisateur (10), et
- envoyer (408), lorsque la seconde cellule (14) n'est pas désignée dans les données d'assistance de positionnement comme la cellule desservant l'équipement d'utilisateur (10), une indication de desserte indiquant que la seconde cellule (14) est la cellule desservant l'équipement d'utilisateur (10) au noeud de positionnement (17).

9. Procédé selon l'une quelconque des revendications 1 à 8, dans lequel l'équipement d'utilisateur (10) change de cellule vers la seconde cellule (14), laquelle seconde cellule (14) fonctionne, au moins en partie, sur une bande de fréquences différente de la première cellule (11); comprenant en outre l'étape suivante :
- demander (409) une reconfiguration de mesure lorsque l'équipement d'utilisateur (10) ne peut pas effectuer de mesure sur cette bande de fréquences différente sans écarts de mesure.

10. Procédé selon l'une quelconque des revendications 1 à 9, dans lequel l'équipement d'utilisateur (10) change de la première cellule (11) vers la seconde cellule (14), comprenant en outre les étapes suivantes :
- redémarrer (410) l'exécution de mesures Rx-Tx sur la seconde cellule (14) après le processus de changement de cellule vers la seconde cellule (14), et
- rapporter (411) les mesures Rx-Tx seulement pour la seconde cellule (14) desservant l'équipement d'utilisateur (10).

11. Procédé selon l'une quelconque des revendications 1 à 10, dans lequel la première cellule (11) est une cellule de desserte et la seconde cellule (14) est une cellule voisine avant le processus de changement de cellule.

12. Procédé selon l'une quelconque des revendications 1 à 11, dans lequel la première cellule est une cellule primaire et la seconde cellule (14) est une cellule secondaire dans un système à porteuses multiples.

13. Procédé selon l'une quelconque des revendications 1 à 12, dans lequel le processus de changement de cellule est représenté par un processus de transfert, un processus de resélection de cellule, ou un changement de cellule primaire.

14. Équipement d'utilisateur (10) pour prendre en charge un changement de cellule dans un réseau à évolution à long terme, lequel équipement d'utilisateur (10) est conçu pour être desservi par au moins une première cellule (11) contrôlée par un noeud de réseau radio (12), l'équipement d'utilisateur (10) comprenant :
un circuit de report (501), configuré pour reporter une session de positionnement par rapport à un processus de changement de cellule vers une seconde cellule (14) au moment d'exécuter le processus de changement de cellule et la session de positionnement de l'équipement d'utilisateur (10), dans lequel la session de positionnement comprend une procédure de mesure pour une mesure de positionnement, et le circuit de report (501) est configuré pour reporter la session de positionnement en retardant la procédure de mesure.

15. Équipement d'utilisateur (10) selon la revendication 14, dans lequel, lorsque le processus de changement de cellule est en cours, le circuit de report (501) est configuré pour reporter la session de positionnement jusqu'à ce que le processus de changement de cellule soit terminé.

16. Équipement d'utilisateur (10) selon l'une quelconque des revendications 14 à 15, comprenant en outre :
un émetteur (502) configuré pour transmettre un indicateur, un message d'interruption, ou un message d'échec à un noeud de positionnement (17) lorsque la session de positionnement est reportée.

17. Équipement d'utilisateur (10) selon l'une quelconque des revendications 14 à 16, dans lequel le circuit de report (501) est configuré pour reporter une session de positionnement sur la base d'un type spécifique de session de positionnement, un type spécifique de mesures de positionnement de la session de positionnement, ou un type spécifique de services de positionnement associés à la session de positionnement.

18. Équipement d'utilisateur (10) selon l'une quelconque des revendications 14 à 17, dans lequel le circuit de report (501) est en outre configuré pour reporter une session de positionnement en fonction d'un type de processus de changement de cellule.

19. Équipement d'utilisateur (10) selon l'une quelconque des revendications 15 à 18, comprenant en outre :
un récepteur (504), configuré pour recevoir des données d'assistance de positionnement d'un noeud de positionnement (17), lesquelles données d'assistance de positionnement et un nombre de trame de système d'au moins une cellule dans les données d'assistance de positionnement sont à utiliser lors de l'exécution d'une mesure de positionnement.
un circuit de vérification (505) configuré pour vérifier, après que le processus de changement de cellule a été exécuté, que la seconde cellule (14) se trouve dans les données d'assistance de positionnement reçues, et
un émetteur (502) configuré pour transmettre, lorsque la seconde cellule (14) ne se trouve pas dans les données d'assistance de positionnement, une demande pour les données d'assistance de positionnement de la seconde cellule (14) seulement au noeud de positionnement (17).

20. Équipement d'utilisateur (10) selon la revendication 19, dans lequel les données d'assistance de positionnement comprennent une indication d'une cellule desservant l'équipement d'utilisateur (10).

21. Équipement d'utilisateur (10) selon l'une quelconque des revendications 19 à 20, dans lequel le circuit de vérification (505) est en outre configuré pour vérifier, après que le processus de changement de cellule a été exécuté, que l'indication dans les données d'assistance de positionnement reçues désigne la seconde cellule (14) comme la cellule desservant l'équipement d'utilisateur (10), et
l'émetteur (502) est en outre configuré pour transmettre, lorsque la seconde cellule (14) n'est pas désignée dans les données d'assistance de positionnement comme la cellule desservant l'équipement d'utilisateur (10), une indication de desserte indiquant que la seconde cellule (14) est la cellule desservant l'équipement d'utilisateur (10) au noeud de positionnement (17).

22. Équipement d'utilisateur (10) selon l'une quelconque des revendications 14 à 21, dans lequel l'équipement d'utilisateur (10) est conçu pour changer de cellule vers la seconde cellule (14), laquelle seconde cellule (14) fonctionne, au moins en partie, sur une bande de fréquences différente de la première cellule (11); dans lequel l'équipement d'utilisateur (10) comprend en outre un circuit de demande (506) configuré pour demander une reconfiguration de mesure lorsque l'équipement d'utilisateur (10) ne peut pas effectuer de mesure sur cette bande de fréquences différente sans écarts de mesure.

23. Équipement d'utilisateur (10) selon l'une quelconque des revendications 14 à 22, dans lequel l'équipement d'utilisateur (10) est conçu pour changer de la première cellule (11) vers la seconde cellule (14); lequel équipement d'utilisateur (10) comprend en outre :
un circuit de redémarrage (507) configuré pour redémarrer l'exécution de mesures Rx-Tx sur la seconde cellule (14) après le processus de changement de cellule vers la seconde cellule (14), et
un circuit de rapport (508), configuré pour rapporter les mesures Rx-Tx seulement pour la seconde cellule (14) desservant l'équipement d'utilisateur (10).

24. Équipement d'utilisateur (10), selon l'une quelconque des revendications 14 à 23, dans lequel la première cellule (11) est une cellule de desserte et la seconde cellule (14) est une cellule voisine avant le processus de changement de cellule.

25. Équipement d'utilisateur (10), selon l'une quelconque des revendications 14 à 24, dans lequel la première cellule (11) est une cellule primaire et la seconde cellule (14) est une cellule secondaire dans un système à porteuses multiples.

26. Équipement d'utilisateur (10), selon l'une quelconque des revendications 14 à 25, dans lequel le processus de changement de cellule est représenté par un processus de transfert, un processus de resélection de cellule, ou un changement de cellule primaire.
